# EUROPÄISCHE PATENTSCHRIFT

(11) **EP 3 638 522 B1**
(45) Veröffentlichungstag und Bekanntmachung des Hinweises auf die Patenterteilung: **05.03.2025**
(21) Anmeldenummer: 18733810.8
(22) Anmeldetag: 13.06.2018
(51) Int. Cl.: B29L 31/00, B60G 21/055, F16F 1/16, F16F 1/373, B29C 65/00, B29C 65/48

(54) **STABILISATOR-KLEBELAGER FÜR EINEN FAHRZEUGSTABILISATOR, FAHRZEUGSTABILISATOR MIT STABILISATOR-KLEBELAGER UND EIN VERFAHREN ZUM AUSBILDEN EINES STABILISATOR-KLEBELAGERS AN EINEN FAHRZEUGSTABILISATOR**
STABILIZER BAR ADHESIVE MOUNT FOR A VEHICLE STABILIZER BAR, VEHICLE STABILIZER BAR HAVING A STABILIZER BAR ADHESIVE MOUNT, AND METHOD FOR FORMING A STABILIZER BAR ADHESIVE MOUNT ON A VEHICLE STABILIZER BAR
LIT D'ADHÉSIF DE STABILISATEUR POUR STABILISATEUR DE VÉHICULE, STABILISATEUR DE VÉHICULE MUNI D'UN LIT D'ADHÉSIF DE STABILISATEUR ET PROCÉDÉ DE FORMATION D'UN LIT D'ADHÉSIF DE STABILISATEUR AU NIVEAU D'UN STABILISATEUR DE VÉHICULE

(30) Priorität: 14.06.2017 DE 102017210022; 25.08.2017 DE 102017214947
(43) Veröffentlichungstag der Anmeldung: 22.04.2020
(73) Patentinhaber: ThyssenKrupp Federn und Stabilisatoren GmbH, 58119 Hagen (DE); thyssenkrupp AG, 45143 Essen (DE)
(72) Erfinder: SCHÜSSLER, Daniel, San Luis Potosi 78420 (MX); LECHNER, Dieter, 40470 Düsseldorf (DE); SCHNEIDER, Frank, 44229 Dortmund (DE); CHONG, Angel, San Luis Potosi 78369 (MX); BECKER, Valeri, 63679 Schotten (DE); KERBS, Artur, 63546 Hammersbach (DE); DITZEL, Jörg, 63579 Freigericht (DE)
(74) Vertreter: thyssenkrupp Intellectual Property GmbH
(86) Internationale Anmeldenummer: PCT/EP2018/065671
(87) Internationale Veröffentlichungsnummer: WO 2018/229135

(56) Entgegenhaltungen:
- EP-A1- 2 650 150
- DE-A1- 102013 001 898
- JP-A- 2010 137 688
- US-A- 5 588 209

## Beschreibung

Die vorliegende Erfindung betrifft ein Stabilisator-Klebelager für einen Fahrzeugstabilisator, einen Fahrzeugstabilisator umfassend mindestens ein Stabilisator-Klebelager und ein Verfahren zum Ausbilden eines Stabilisator-Klebelagers an einen Fahrzeugstabilisator.

### Stand der Technik

Fahrzeugstabilisatoren für Kraftfahrzeuge sind im Stand der Technik in einer Vielzahl von Ausführungsformen bekannt und werden beispielsweise auch als Stabilisatoren, Stabilisierungsdrehstäbe oder Torsionsfederstäbe bezeichnet. Diese stabilisierenden Drehstäbe dienen der Stabilisierung gegen Neigung und Verwindung der Karosserie insbesondere bei Kurvenfahrt eines Kraftfahrzeugs, Fahrten eines Kraftfahrzeugs über wechselnde Fahrbahnoberflächen und bei Fahrbahnunebenheiten. Solche Stabilisatoren sind üblicherweise im Bereich der Vorder- und der Hinterachse angeordnet und erstrecken sich zumeist über die gesamte Breite des Fahrzeugs. Die Befestigung solcher Stabilisatoren an dem Fahrwerk einerseits und der Karosserie andererseits beinhaltet das Problem, dass die an dem Fahrwerk ankommenden, entstehenden und/oder von dem Fahrwerk aufgenommenen Vibrationen, Schwingungen und Geräuschen, wie beispielsweise Rad- und Fahrbahngeräusche über die Befestigung auf die Karosserie und somit auch in die Fahrgastzelle übertragen werden. Um diese Übertragung zu dämpfen, insbesondere zu verringern, werden die Stabilisatoren üblicherweise dämpfend mit Stabilisatorlagern befestigt. Diese Stabilisatorlager sind im Stand der Technik auch als Hülsenlager bekannt, welche eine starre Außenhülse, auch als ringförmige Manschette bezeichnet und einer koaxial in dieser ringförmigen Manschette angeordnete elastische Innenkontur aufweisen. Ebenso bekannt ist die Anordnung einer elastischen Innenkontur an einem Stabilisatorstab, wobei der Stabilisatorstab über die an demselbigen angeordneten elastische Innenkontur insbesondere mit einer Schelle an einem Fahrzeugunterboden befestigt wird. Allgemein besteht eine starre Außenvorrichtung, welche an einem Fahrzeugunterboden befestigt wird, wobei innerhalb dieser Außenvorrichtung eine elastischen Innenkontur, welcher koaxial um einen Stabilisator angeordnet ist. Diese vorgenannten Lager können hinsichtlich ihrer Wirkweise in Gleitlager, Klemmlager, Haftlager und Klebelager unterschieden werden. Bei der Verwendung von Gleitlagern kann sich der Stabilisator gegen eine geringe Reibungskraft frei in torsionaler und axialer Richtung verschieben. Zur axialen Sicherung des Bauteils werden hierbei zusätzliche Vorkehrungen getroffen. Klemmlager stellen eine klemmende Verbindung zu dem Stabilisator her und weisen in einem entspannten Zustand einen im Vergleich zum Außendurchmesser des Stabilisators, an welcher das Klemmlager angeordnet wird, kleineren Innendurchmesser auf. Üblicherweise werden Klemmlager bei der Montage an einem Stabilisator vorgespannt und dann an dem Stabilisator angeordnet. Klemmlager können zudem eine koaxiale Innenhülse aufweisen. Haftlager stellen unter Anwendung eines Haftsystems eine haftende Verbindung zu dem Stabilisator her, wobei die elastische Innenkontur wenigstens teilweise an der Mantelfläche des Stabilisators, an welcher das Haftlager angeordnet wird, haftet. Zur Haftung des an dem Stabilisator angeordneten Haftlagers sind im Stand der Technik eine Vielzahl von Haftsystemen, insbesondere umfassend einen Primer und einen Cover, bekannt. Klebelager stellen unter Anwendung einer Klebemittelzusammensetzung eine Klebeverbindung zu dem Stabilisator her, wobei die elastische Innenkontur wenigstens teilweise an der Mantelfläche des Stabilisators, an welcher das Klebelager angeordnet wird, angeklebt wird. Zur Verklebung des an dem Stabilisator angeordneten Klebelagers sind im Stand der Technik eine Vielzahl von Klebemittelzusammensetzungen und Klebemittelsystemen, insbesondere umfassend Zweikomponentensysteme mit Binder und Härter, bekannt. Ein wesentlicher Unterschied zwischen Haftlagern und Klebelagern ist, dass die Verklebung der Klebelager bei wesentlich niedrigeren Temperaturen durchgeführt werden kann und hierdurch eine Verringerung der Prozesskosten ermöglicht wird.

Für die Befestigung der Stabilisatorlager an dem Fahrwerk und der Karosserie sind im Stand der Technik eine Vielzahl von Anordnungen und Befestigungsmöglichkeiten bekannt, welche die Grundfunktion des Stabilisatorlagers nicht verändern. Beispielsweise kann ein Stabilisatorlager mit einer Lagerschale oder einer Schelle an dem Fahrwerk und/oder der Karosserie befestigt werden.

Aus der DE 10 2013 001 898 A1 ist ein Stabilisator-Klebelager mit einer elastischen Innenkontur bekannt.

EP 2 650 150 A1 offenbart den Oberbegriff des Anspruch 1, nämlich eine in Buchse und Halterung integrierte Stabilisatorstange, die eine Stabilisatorstange, eine an einem Außenumfang der Stabilisatorstange befestigte Gummibuchse und eine Halterung umfasst.

JP 2010 137688 A zeigt eine Technologie zur vorteilhaften Herstellung einer Stabilisatorstange mit einer Vibrationskontrollbuchse, die vulkanisiert und mit der Stabilisatorstange an einer Innenumfangsfläche eines Innenlochs der Vibrationskontrollbuchse mit ausreichender Haftfestigkeit befestigt ist.

US 5,588,209 A offenbart ein Verfahren zur Herstellung eines Fahrzeugstabilisators, an dem zwei nichtmetallische Komponenten im Abstand D direkt angeformt sind, um ihn an ein Fahrzeugchassis anzuschließen.

DE 10 2013 001 898 A1 offenbart ein Verfahren zum Verbessern der Temperaturverteilung von induktiv- bzw. konduktiv beheizten Bauteilen, insbesondere aber nicht ausschließlich geformte Rohre und Stäbe zur Verwendung als Fahrwerksstabitisatoren, dadurch gekennzeichnet, dass im Bereich der Bögen, aktiv mit Luft- oder Wasserbrausen, während des Heizprozesses, gekühlt wird.

Der vorliegenden Erfindung liegt daher die Aufgabe zugrunde, einen verbesserten Fahrzeugstabilisator und/oder ein Stabilisator-Klebelager und ein verbessertes Verfahren zum Ausbilden eines Stabilisator-Klebelagers an einen Fahrzeugstabilisator, bereitzustellen, bei welchem die zuvor genannten Nachteile vermieden werden. Insbesondere soll es mit diesem verbesserten Fahrzeugstabilisator und/oder Stabilisator-Klebelager und dem verbesserten Verfahren zum Ausbilden eines Stabilisator-Klebelagers an einen Fahrzeugstabilisator, möglich sein, im Betrieb des Stabilisators auftretende Relativbewegungen zwischen Stabilisator und Stabilisator-Klebelager zu reduzieren und eine verbesserte Fahrdynamik zu erreichen. Des Weiteren soll ein Stabilisator-Klebelager bereitgestellt werden, welches die Vorteile eines Klemmlagers und die eines Haftlagers wenigstens teilweise vereint. Zudem soll die Herstellung einer wenigstens teilweisen Klebeverbindung zwischen einem Stabilisator und einem an diesem angeordneten Klebelager im Vergleich zu Haftlagern und/oder Klebelagern nach dem Stand der Technik zeitlich schneller und/oder bei einer niedrigeren Prozesstemperatur durchgeführt werden, was den Vorteil eines geringeren Energieverbrauches des Prozesses ergibt. Zudem soll eine Klebeverbindung des Stabilisator-Klebelagers auf dem Stabilisator bei Vorspannung ohne Einrisse an dem Stabilisator-Klebelager gewährleistet sein. Des Weiteren soll mit dem verbesserten Verfahren zum Herstellen eines Stabilisators, umfassend ein Stabilisator-Klebelager, ein stabiler Fertigungsprozess für das Kleben von Stabilisator-Klebelagern an einem Stabilisator zur Verfügung gestellt werden. Zudem soll das verbesserte Verfahren zum Herstellen des Stabilisators, umfassend ein Stabilisator-Klebelager, einfach und sicher in bereits bestehende Verfahren implementiert werden können.

### Offenbarung der Erfindung

Diese Aufgabe wird mit einem Stabilisator-Klebelager nach Anspruch 1, ein Verfahren zum Ausbilden eines Stabilisator-Klebelagers nach Anspruch 2 und einen Fahrzeugstabilisator nach den Ansprüchen 8 und 9 gelöst.

Der erfindungsgemäße Stabilisator für Fahrzeuge, insbesondere, umfassend mindestens ein Stabilisator-Klebelager weist gegenüber konventionellen Stabilisatoren den Vorteil auf, dass die Eigenschaften eines Klemmlagers mit denen eines Haftlagers wenigstens teilweise vereint werden.

Das erfindungsgemäße Verfahren zum Ausbilden eines Stabilisator-Klebelagers, insbesondere zum Herstellen von Drehstabschulterlagern für Fahrzeuge weist gegenüber konventionellen Verfahren den Vorteil auf, dass es zeitlich schneller und/oder bei einer niedrigeren Prozesstemperatur durchgeführt werden kann, was den Vorteil eines geringeren Energieverbrauches des Prozesses ergibt. Ein weiterer Vorteil des erfindungsgemäßen Verfahrens ist, dass es in bereits bestehende Verfahren einfach und zuverlässig integriert werden kann.

Gegenstand der Erfindung ist daher ein Stabilisator-Klebelager für einen Fahrzeugstabilisator, wobei das Stabilisator-Klebelager zur koaxialen Anordnung an dem Fahrzeugstabilisator mindestens eine ringförmige Manschette mit einer elastischen Innenkontur umfasst, wobei die elastische Innenkontur der mindestens einen ringförmigen Manschette zumindest auf der dem Fahrzeugstabilisator zugewandten Seite eine dreidimensional strukturierte Oberfläche mit einem Klebemittelaufnahmevolumen aufweist, wobei die dreidimensional strukturierte Oberfläche eine maximale Rauhtiefe (Rₘₐₓ) von größer als 45µm und eine Kernrauhtiefe (R_{K}) von mindestens 65 % bezogen auf die maximale Rauhtiefe (Rₘₐₓ) der dreidimensional strukturierten Oberfläche aufweist, wobei die maximale Rauhtiefe (Rₘₐₓ) die Summe aus reduzierter Spitzenhöhe, Kernrautiefe (Rₖ) und reduzierter Riefentiefe (Rᵥₖ) ist, wobei die reduzierte Spitzenhöhe (Rₚₖ), die reduzierte Riefentiefe (Rᵥₖ) und die Kernrauhtiefe (R_{K}) bestimmt sind nach EN ISO 13565-2: Dezember 1997, wobei die mindestens eine ringförmige Manschette in Längsrichtung des Fahrzeugstabilisators zusätzlich mindestens ein erstes an dem einen Ende der mindestens einen ringförmigen Manschette angeordnetes Dichtelement und mindestens ein weiteres an dem anderen Ende der mindestens einen ringförmigen Manschette angeordnetes Dichtelement aufweist.

Ein weiterer Gegenstand der Erfindung ist ein Verfahren zum Ausbilden eines Stabilisator-Klebelagers an einen Fahrzeugstabilisator, insbesondere zum Herstellen von Drehstabschulterlagern für Kraftfahrzeuge, umfassend die Schritte:
a) Bereitstellen eines Stabilisators mit einer Mantelfläche zur Anordnung eines Stabilisator-Klebelagers;
b) Bereitstellen des Stabilisator-Klebelagers umfassend mindestens eine ringförmige Manschette mit einer elastischen Innenkontur zumindest auf der dem Fahrzeugstabilisator zugewandten Seite, wobei die elastische Innenkontur eine dreidimensional strukturierte Oberfläche mit einem Klebemittelaufnahmevolumen aufweist, wobei die dreidimensional strukturierte Oberfläche eine maximale Rauhtiefe (Rₘₐₓ) von größer als 45 µm und eine Kernrauhtiefe (R_{K}) von mindestens 65 % bezogen auf die maximale Rauhtiefe (Rₘₐₓ) der dreidimensional strukturierten Oberfläche aufweist, wobei die maximale Rauhtiefe (Rₘₐₓ) die Summe aus reduzierter Spitzenhöhe (Rₚₖ) und reduzierter Riefentiefe (Rᵥₖ) ist, wobei die reduzierte Spitzenhöhe (Rₚₖ), die reduzierte Riefentiefe (Rᵥₖ) und die Kernrauhtiefe (R_{K}) bestimmt sind nach EN ISO 13565-2: Dezember 1997;
c) Bereitstellen mindestens einer Montagevorrichtung;
d) Bereitstellen mindestens einer Klebemittelzusammensetzung;
e) Wenigstens teilweises Vorbehandeln der dreidimensional strukturierten Oberfläche des in Schritt b) bereitgestellten Stabilisator-Klebelagers und/oder der Mantelfläche zur Anordnung des Stabilisator-Klebelagers des in Schritt a) bereitgestellten Stabilisators mit der in Schritt d) bereitgestellten mindestens einen Klebemittelzusammensetzung;
f) Anordnen des in Schritt b) bereitgestellten oder in Schritt e) wenigstens teilweise vorbehandelten mindestens einen Stabilisator-Klebelagers in der in Schritt c) bereitgestellten mindestens einen Montagevorrichtung;
g) Anordnen des in Schritt a) bereitgestellten Stabilisators in dem Stabilisator-Klebelager in der in Schritt f) angeordneten Montagevorrichtung, unter Herstellen einer wenigstens teilweisen Klebeverbindung zwischen der in Schritt e) wenigstens teilweise vorbehandelten dreidimensional strukturierten Oberfläche und/oder der in Schritt e) wenigstens teilweise vorbehandelten Mantelfläche.

Ein weiterer Gegenstand der Erfindung ist ein Fahrzeugstabilisator umfassend mindestens ein koaxial angeordnetes mit mindestens einer ringförmigen Manschette mit einer elastischen Innenkontur, wie oben beschrieben.

Ein weiterer Gegenstand der Erfindung ist ein Fahrzeugstabilisator umfassend mindestens ein koaxial angeordnetes Stabilisator-Klebelager ausgebildet nach dem erfindungsgemäßen Verfahren.

Die Erfindung kann sowohl in dem Stabilisator-Klebelager als auch in einem Fahrzeugstabilisator als auch in Verfahren zum Ausbilden eines Stabilisator-Klebelagers verwirklicht sein.

### Detaillierte Beschreibung der Erfindung

Ein Stabilisator wird im Rahmen der Erfindung auch als ein Stabilisierungsdrehstab verstanden. Insbesondere werden Abschnitte von Stabilisatoren und/oder geteilte Stabilisatoren als erfindungsgemäße Stabilisatoren verstanden.

Unter einem Stabilisator-Klebelager wir im Sinne der vorliegenden Erfindung ein Stabilisatorlager, insbesondere ein Drehstablager verstanden, welches an den Stabilisator, insbesondere den Drehstab mit einer Klebeverbindung angeordnet werden kann.

Unter einer ringförmigen Manschette wird im Rahmen der vorliegenden Erfindung eine Manschette, welche ringförmig um einen Stabilisator anordenbar ist und wenigstens eine Öffnung, insbesondere eine Schlitzöffnung aufweist, über welche die Manschette an einem Stabilisator angeordnet werden kann, verstanden. Insbesondere kann eine ringförmige Manschette zwei Ringöffnungen aufweisen und somit zwei Teile umfassen. Beispielsweise ist auch eine segmentierte Manschette, welche zwei und mehr Teile umfasst eine erfindungsgemäße Ausführungsform.

Im Rahmen der vorliegenden Erfindung wird unter einer elastischen Innenkontur die Innenkontur einer ringförmigen Manschette verstanden, welches bei Zug- und/oder Druckbelastung insbesondere beim Anliegen einer Vorspannung elastisch verformbar ist und sich ohne die Zug- und/oder Druckbelastung wieder in die ursprüngliche Gestalt zurück orientiert. Beispielsweise werden erfindungsgemäße elastischen Innenkonturen umfassend eine Materialzusammensetzung ausgewählt unter einer Gruppe von ganz oder teilweise vulkanisierten Elastomeren, insbesondere von Naturkautschuk, Poly(1,4-cis-isopren), Poly(1,4-trans-isopren), Synthesekautschuke, insbesondere Ethylen-Propylen-Kautschuke, Ethylen-Propylen-Dien-Kautschuke, Butylkautschuke, Silicon-Kautschuke, Butadiene und/oder dessen Mischpolymeriosate, Gummi, Polyurethane, thermoplasischen Elastomeren, insbesondere thermoplastische Elastomere auf Olefinbasis, vernetzte thermoplastische Elastomere auf Olefinbasis, thermoplastische Elastomere auf Urethanbasis, thermoplastische Polyesterelastomere, thermoplastische Copolyester, Styrol-Blockcopolymere, thermoplastische Copolyamide und Kombinationen hiervon.

Das Rauhigkeitsprofil der dreidimensional strukturierten Oberfläche, aus welchem sich nach der EN ISO 13565-2: Dezember 1997 die maximale Rauhtiefe (Rₘₐₓ), die reduzierter Spitzenhöhe (Rₚₖ), die reduzierter Riefentiefe (Rᵥₖ) und die Kernrauhtiefe (R_{K}) berechnet, wird ermittelt, indem die dreidimensional strukturierten Oberfläche in mindestens vier geradlinigen Messrichtungen über eine Mindestmesslänge (L_{N}) von mindestens 15mm für jede der geradlinigen Messrichtungen, welche jeweils um 45° voneinander abweichen, gemessen wird. Insbesondere kann für die Messung des Rauhigkeitsprofils der dreidimensional strukturierten Oberfläche das Messgerät MarSurf CWM 100 mit Sub-Nanometer-Auflösung des Unternehmens Mahr GmbH mit Sitz in Göttingen, Deutschland und für die Auswertung des gemessenen Rauhigkeitsprofils gemäß nach EN ISO 13565-2: Dezember 1997 die Topologie-Software MarSurf MfM/MfMplus des Unternehmens Mahr GmbH mit Sitz in Göttingen, Deutschland eingesetzt werden.

Unter Klebemittel werden Zusammensetzungen verstanden, welche eine Klebeverbindung, insbesondere nach einem Aushärtungsvorgang, zwischen einem Stabilisator und einem an dem Stabilisator angeordneten Stabilisator-Klebelager ausbilden.

Im Rahmen der vorliegenden Erfindung wird unter einem Klebemittelaufnahmevolumen ein Volumen zur Aufnahme von Klebemittel, insbesondere einer Klebemittelzusammensetzung verstanden. Beispielsweise kann eine Oberfläche, insbesondere eine dreidimensional strukturierte Oberfläche einer elastischen Innenkontur Vertiefungen aufweisen, welche ein Klebemittelaufnahmevolumen bereitstellen. Insbesondere können Oberflächenvertiefungen Klebemittel aufweisen.

Im Rahmen der vorliegenden Erfindung werden die Bergriffe reduzierte Spitzenhöhe (Rₚₖ), reduzierte Riefentiefe (Rᵥₖ) und Kernrauhtiefe (R_{K}) gemäß EN ISO 13565-2: Dezember 1997 verstanden. Die ISO 13565-2: Dezember 1997 ist Bestandteil der Offenbarung der vorliegenden Erfindung.

Erfindungsgemäß weist das Stabilisator-Klebelager mindestens eine ringförmige Manschette in Längsrichtung des Fahrzeugstabilisators zusätzlich mindestens ein erstes an dem einen Ende der mindestens einen ringförmigen Manschette angeordnetes Dichtelement und mindestens ein weiteres an dem anderen Ende der mindestens einen ringförmigen Manschette angeordnetes Dichtelement auf.

Unter einem Dichtelement wird im Rahmen der vorliegenden Erfindung ein Element zur Zurückhaltung von Klebemittel verstanden, welches an der ringförmigen Manschette insbesondere endseitig angeordnet ist. Beispielsweise sind Dichtelemente ausgewählt aus einer Gruppe von Dichtlippen, Dichtleisten, Dichtringen, Dichtkeilen, Dichtfugen oder einer Kombination hiervon.

In einer bevorzugten Ausführungsform ist die Reihenfolge der Schritte e) bis f) des erfindungsgemäßen Verfahrens beliebig.

In einer bevorzugten Ausführungsform des erfindungsgemäßen Verfahrens wird das Anordnen in Schritt f) unter Vorspannen des mindestens einen Stabilisator-Klebelagers durchgeführt.

Im Rahmen der vorliegenden Erfindung wird unter einer Montagevorrichtung eine Vorrichtung verstanden, mit welcher ein Stabilisator-Klebelager an einem Stabilisator angeordnet wird. Insbesondere ist eine Montagevorrichtung ausgewählt aus einer Gruppe von einer Schelle, einem Befestigungsbügel, einer ringförmigen Klammer, einer Quette, einer Fahrzeugschelle, einem Schellenlagerverbundbauteil oder einer Kombination hiervon. Beispielweise kann unter einer Montagevorrichtung auch eine Spannvorrichtung, d.h. eine Vorrichtung verstanden werden, mit welcher eine in der Spannvorrichtung angeordnete ringförmige Manschette mit einem Druck beaufschlagt werden kann. Beispiele für eine Spannvorrichtung sind Spannwerkzeuge, Schellen, Klemmen oder Kombinationen hiervon.

Unter Vorspannung wird im Rahmen der vorliegenden Erfindung verstanden, wenn eine Kraft, welche größer ist als die Gewichtskraft eines Stabilisator-Klebelagers, welches auf einem Stabilisator angeordnet ist, ausgeübt wird. Insbesondere wird mit dem Aufbringen einer Vorspannung die Verteilung der Klebemittelzusammensetzung zwischen der dreidimensional strukturierten Oberfläche des Stabilisator-Klebelagers und dem Stabilisator durchgeführt. Beispielsweise kann eine Vorspannung auch durchgeführt werden, wenn der Stabilisator, an welchem ein Stabilisator-Klebelager angeordnet ist, einen größeren Außendurchmesser im Verhältnis zu dem Innendurchmesser des Stabilisator-Klebelagers im nicht angeordneten Zustand aufweist. Dies ist wird im Stand der Technik auch als eine Überdeckung bezeichnet.

Die Anbringung eines erfindungsgemäßen Stabilisator-Klebelagers erfolgt üblicherweise auf einem erfindungsgemäßen Stabilisator, welcher eine wenigstens teilweise beschichtete Oberfläche aufweist. Unter einer beschichteten Oberfläche im Rahmen der vorliegenden Erfindung wird das Aufbringen einer festhaftenden Schicht aus einer formlosen Zusammensetzung wenigstens teilweise auf die Oberfläche des erfindungsgemäßen Stabilisators verstanden. Die beschichtete Oberfläche kann beispielsweise nach dem Beschichtungsverfahren ausgewählt sein aus der Gruppe einer Lackierung, insbesondere einer Sprühlackierung, einer Spritzlackierung, einer Tauchbadlackierung, einem Schmelztauchen, einer Pulverbeschichtung, einem Emaillieren, einem Vorhangauftrag, einem Strichauftrag, einer Flammenbeschichtung, und Kombinationen hiervon. Somit umfasst der erfindungsgemäße Stabilisator eine beschichtete Oberfläche.

Unter einer Klebemittelzusammensetzung wird im Rahmen der vorliegenden Erfindung eine Zusammensetzung verstanden, bei welcher der Härtungsprozess, insbesondere die Polymerisation durch Feuchtigkeit, wie beispielsweise Luftfeuchtigkeit ausgelöst wird.

Beispielsweise umfasst die Klebemittelzusammensetzung die Gruppe von (Poly)cyanoacrylat, insbesondere Methylcyanacrylat, Ethylcyanacrylat oder Kombination hiervon.

In einer bevorzugten Ausführungsform des erfindungsgemäßen Verfahrens wird das Herstellen der wenigstens teilweisen Klebeverbindung in Schritt g) innerhalb von weniger als 120 s, vorzugsweise von weniger als 90s, besonders bevorzugt von weniger als 60s, ganz besonders bevorzugt von weniger als 30s durchgeführt.

In einer weiteren Ausführungsform erfolgt das Herstellen der wenigstens teilweisen Klebeverbindung in Schritt g) ohne Zufuhr von Reaktionstemperatur, insbesondere ohne einen zusätzlichen Erwärmungsschritt. Insbesondere wird unter der Zufuhr von Reaktionstemperatur verstanden, dass eine Wärmezufuhr im Bereich der Klebeverbindung erfolgt, beispielsweise mit einem Heißluftgebläse, einem Infrarot-Strahler, einer UV-Lampe, einer Induktionsvorrichtung, einer konduktiven Heizvorrichtung, einem Gas- oder Elektroofen oder Kombination hiervon und/oder die Wärme aus einem vorgeschalteten Prozeß stammt, zum Beispiel aus einem Lackierprozess.

In einer bevorzugten Ausführungsform der Erfindung wird in einem weiteren Schritt h) das in Schritt g) an dem Stabilisator unter Herstellen wenigstens einer Klebeverbindung angeordnete Stabilisator-Klebelager aus der mindestens einen Spannvorrichtung entnommen.

### Kurze Beschreibung der Zeichnungen

Das erfindungsgemäße Stabilisator-Klebelager wird anhand der Zeichnung erläutert.

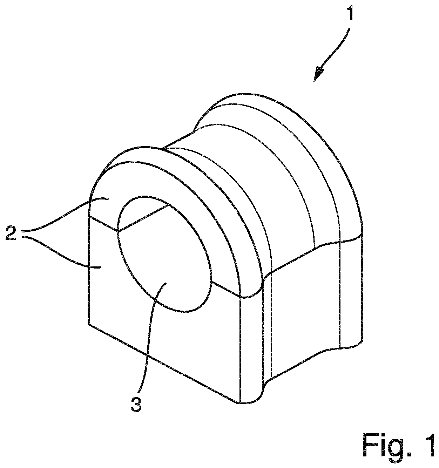

Fig. 1 zeigt schematisch eine dreidimensionale Ansicht des Stabilisator-Klebelagers im entspannten Zustand gemäß einer Ausführungsform der Erfindung.

In der Fig. 1 ist eine Ausführungsform eines Stabilisator-Klebelagers 1 in einem entspannten Zustand mit einer ringförmigen Manschette 2, welche im vorliegenden Fall aus zwei Hälften besteht dargestellt. Die ringförmige Manschette 2 umfasst eine elastische Innenkontur mit einer dreidimensional strukturierten Oberfläche 3.

### Gewerbliche Anwendbarkeit

Stabilisator-Klebelager und Fahrzeugstabilisatoren umfassend mindestens ein koaxial angeordnetes Stabilisator-Klebelager der vorbeschriebenen Art werden in der Produktion von Kraftfahrzeugen, insbesondere von Fahrwerken der Kraftfahrzeuge eingesetzt.

### Bezugszeichenliste

- 1 =: Stabilisator-Klebelager
- 2 =: ringförmigen Manschette
- 3 =: dreidimensional strukturierte Oberfläche

## Patentansprüche

1. Stabilisator-Klebelager (1) für einen Fahrzeugstabilisator, wobei das Stabilisator-Klebelager (1) zur koaxialen Anordnung an dem Fahrzeugstabilisator mindestens eine ringförmige Manschette (2) mit einer elastischen Innenkontur umfasst,
wobei
die elastische Innenkontur der mindestens einen ringförmigen Manschette (2) zumindest auf der dem Fahrzeugstabilisator zugewandten Seite eine dreidimensional strukturierte Oberfläche (3) mit einem Klebemittelaufnahmevolumen aufweist, **dadurch gekennzeichnet, dass** die dreidimensional strukturierte Oberfläche (3) eine maximale Rauhtiefe (Rₘₐₓ) von größer als 45 µm und eine Kernrauhtiefe (R_{K}) von mindestens 65 % bezogen auf die maximale Rauhtiefe (Rₘₐₓ) der dreidimensional strukturierten Oberfläche (3) aufweist, wobei die maximale Rauhtiefe (Rₘₐₓ) die Summe aus reduzierter Spitzenhöhe (Rₚₖ), Kernrauhtiefe (R_{K}) und reduzierter Riefentiefe (Rᵥₖ) ist, wobei die reduzierte Spitzenhöhe (Rₚₖ), die reduzierte Riefentiefe (Rᵥₖ) und die Kernrauhtiefe (R_{K}) bestimmt sind nach EN ISO 13565-2: Dezember 1997, wobei die mindestens eine ringförmige Manschette (2) in Längsrichtung des Fahrzeugstabilisators zusätzlich mindestens ein erstes an dem einen Ende der mindestens einen ringförmigen Manschette (2) angeordnetes Dichtelement und mindestens ein weiteres an dem anderen Ende der mindestens einen ringförmigen Manschette (2) angeordnetes Dichtelement aufweist.

2. Verfahren zum Ausbilden eines Stabilisator-Klebelagers (1) gemäß Anspruch 1 an einen Fahrzeugstabilisator, insbesondere zum Herstellen von Drehstabschulterlagern für Kraftfahrzeuge, umfassend die Schritte:
a) Bereitstellen eines Stabilisators mit einer Mantelfläche zur Anordnung eines Stabilisator-Klebelagers (1);
b) Bereitstellen des Stabilisator-Klebelagers (1) umfassend mindestens eine ringförmige Manschette (2) mit einer elastischen Innenkontur zumindest auf der dem Fahrzeugstabilisator zugewandten Seite, wobei die elastische Innenkontur eine dreidimensional strukturierte Oberfläche (3) mit einem Klebemittelaufnahmevolumen aufweist, wobei die dreidimensional strukturierte Oberfläche (3) eine maximale Rauhtiefe (Rₘₐₓ) von größer als 45 µm und eine Kernrauhtiefe (R_{K}) von mindestens 65 % bezogen auf die maximale Rauhtiefe (Rₘₐₓ) der dreidimensional strukturierten Oberfläche (3) aufweist, wobei die maximale Rauhtiefe (Rₘₐₓ) die Summe aus reduzierter Spitzenhöhe (Rₚₖ), Kernrauhtiefe (R_{K}) und reduzierter Riefentiefe (Rᵥₖ) ist, wobei die reduzierte Spitzenhöhe (Rₚₖ), die reduzierte Riefentiefe (Rᵥₖ) und die Kernrauhtiefe (R_{K}) bestimmt sind nach EN ISO 13565-2: Dezember 1997;
c) Bereitstellen mindestens einer Montagevorrichtung;
d) Bereitstellen mindestens einer Klebemittelzusammensetzung;
e) Wenigstens teilweises Vorbehandeln der dreidimensional strukturierten Oberfläche (3) des in Schritt b) bereitgestellten Stabilisator-Klebelagers (1) und/oder der Mantelfläche zur Anordnung des Stabilisator-Klebelagers (1) des in Schritt a) bereitgestellten Stabilisators mit der in Schritt d) bereitgestellten mindestens einen Klebemittelzusammensetzung;
f) Anordnen des in Schritt b) bereitgestellten oder in Schritt e) wenigstens teilweise vorbehandelten mindestens einen Stabilisator-Klebelagers (1) in der in Schritt c) bereitgestellten mindestens einen Montagevorrichtung;
g) Anordnen des in Schritt a) bereitgestellten Stabilisators in dem Stabilisator-Klebelager (1) in der in Schritt f) angeordneten Montagevorrichtung, unter Herstellen einer wenigstens teilweisen Klebeverbindung zwischen der in Schritt e) wenigstens teilweise vorbehandelten dreidimensional strukturierten Oberfläche (3) und/oder der in Schritt e) wenigstens teilweise vorbehandelten Mantelfläche.

3. Verfahren nach Anspruch 2, **dadurch gekennzeichnet, dass** die Reihenfolge der Schritte e) bis f) beliebig ist.

4. Verfahren nach einem der Ansprüche 2 bis 3, **dadurch gekennzeichnet, dass** das Anordnen in Schritt f) unter Vorspannen des mindestens einen Stabilisator-Klebelagers (1) durchgeführt wird.

5. Verfahren nach einem der Ansprüche 2 bis 4, **dadurch gekennzeichnet, dass** das Herstellen der wenigstens teilweisen Klebeverbindung in Schritt g) innerhalb von weniger als 120 s, vorzugsweise von weniger als 90s, besonders bevorzugt von weniger als 60s, ganz besonders bevorzugt von weniger als 30s durchgeführt wird.

6. Verfahren nach einem der Ansprüche 2 bis 5, **dadurch gekennzeichnet, dass** das Herstellen der wenigstens teilweisen Klebeverbindung in Schritt g) ohne Zufuhr von Reaktionstemperatur, insbesondere ohne einen zusätzlichen Erwärmungsschritt erfolgt.

7. Verfahren nach einem der Ansprüche 2 bis 6, **dadurch gekennzeichnet, dass** in einem weiteren Schritt h) das in Schritt g) an dem Stabilisator unter Herstellen wenigstens einer Klebeverbindung angeordnete Stabilisator-Klebelager (1) aus der mindestens einen Montagevorrichtung entnommen wird.

8. Fahrzeugstabilisator umfassend mindestens ein koaxial angeordnetes Stabilisator-Klebelager (1) mit mindestens einer ringförmigen Manschette (2) mit einer elastischen Innenkontur nach Anspruch 1.

9. Fahrzeugstabilisator umfassend mindestens ein koaxial angeordnetes Stabilisator-Klebelager (1) ausgebildet nach einem der vorherigen Ansprüche 2 bis 7.

## Claims

1. A stabilizer adhesive bearing (1) for a vehicle stabilizer, wherein the stabilizer adhesive bearing (1) comprises at least one annular sleeve (2) having a resilient inner contour for coaxial arrangement on the vehicle stabilizer,
the resilient inner contour of the at least one annular sleeve (2) comprises at least on the side facing the vehicle stabilizer a three-dimensionally structured surface (3) with an adhesive receiving volume,
**characterized in that**
the three-dimensionally structured surface (3) has a maximum roughness depth (Rₘₐₓ) greater than 45 µm and a core roughness depth (R_{K}) of at least 65% relative to the maximum roughness depth (Rₘₐₓ) of the three-dimensionally structured surface (3), wherein the maximum roughness depth (Rₘₐₓ) is the total of the reduced tip height (Rₚₖ), the core roughness depth (R_{K}) and the reduced groove depth (Rᵥₖ), wherein the reduced tip height (Rₚₖ), the reduced groove depth (Rᵥₖ) and the core roughness depth (R_{K}) are determined in accordance with EN ISO 13565-2: December 1997, wherein the at least one annular sleeve (2) further comprises in a longitudinal direction of the vehicle stabilizer at least a first sealing element which is arranged at one end of the at least one annular sleeve (2) and at least one additional sealing element which is arranged at the other end of the at least one annular sleeve (2).

2. A method for forming a stabilizer adhesive bearing (1) as claimed in claim 1 on a vehicle stabilizer, in particular for producing torsion rod shoulder bearings for motor vehicles, comprising the steps of:
a) providing a stabilizer having a covering face for arranging a stabilizer adhesive bearing (1);
b) providing the stabilizer adhesive bearing (1) comprising at least one annular sleeve (2) having a resilient inner contour at least on the side which faces the vehicle stabilizer, wherein the resilient inner contour comprises a three-dimensionally structured surface (3) having an adhesive receiving volume, wherein the three-dimensionally structured surface (3) has a maximum roughness depth (Rₘₐₓ) greater than 45 µm and a core roughness depth (R_{K}) of at least 65% relative to the maximum roughness depth (Rₘₐₓ) of the three-dimensionally structured surface (3), wherein the maximum roughness depth (Rₘₐₓ) is the total of the reduced tip height (Rₚₖ), the core roughness depth (R_{K}) and the reduced groove depth (Rᵥₖ), wherein the reduced tip height (Rₚₖ), the reduced groove depth (Rᵥₖ) and the core roughness depth (R_{K}) are determined in accordance with EN ISO 13565-2: December 1997;
c) providing at least one assembly device;
d) providing at least one adhesive composition;
e) at least partially pretreating the three-dimensionally structured surface (3) of the stabilizer adhesive bearing (1) which is provided in step b) and/or the covering face for arranging the stabilizer adhesive bearing (1) of the stabilizer which is provided in step a) with the at least one adhesive composition which is provided in step d);
f) arranging the at least one stabilizer adhesive bearing (1) which is provided in step b) or which is at least partially pretreated in step e) in the at least one assembly device which is provided in step c);
g) arranging the stabilizer which is provided in step a) in the stabilizer adhesive bearing (1) in the assembly device which is arranged in step f) so as to produce an at least partial adhesive connection between the three-dimensionally structured surface (3) which is at least partially pretreated in step e) and/or the covering face which is at least partially pretreated in step e).

3. The method as claimed in claim 2, **characterized in that** the sequence of the steps e) to f) may be freely selected.

4. The method as claimed in one of claims 2 to 3, **characterized in that** the arrangement in step f) is carried out with pretensioning of the at least one stabilizer adhesive bearing (1).

5. The method as claimed in one of claims 2 to 4, **characterized in that** the production of the at least partial adhesive connection in step g) is carried out within less than 120 sec., preferably less than 90 sec., particularly preferably less than 60 sec., very particularly preferably less than 30 sec.

6. The method as claimed in one of claims 2 to 5, **characterized in that** the production of the at least partial adhesive connection in step g) is carried out without any supply of reaction temperature, in particular without an additional heating step.

7. The method as claimed in one of claims 2 to 6, **characterized in that** in an additional step h) the stabilizer adhesive bearing (1) which is arranged in step g) on the stabilizer while producing at least one adhesive connection is removed from the at least one assembly device.

8. A vehicle stabilizer comprising at least one coaxially arranged stabilizer adhesive bearing (1) having at least one annular sleeve (2) having a resilient inner contour as claimed in claim 1.

9. A vehicle stabilizer comprising at least one coaxially arranged stabilizer adhesive bearing (1) which is formed as claimed in one of claims 2 to 7.

## Revendications

1. Palier adhésif de stabilisateur (1) pour un stabilisateur de véhicule, dans lequel le palier adhésif de stabilisateur (1) comprend au moins un manchon annulaire (2) ayant un contour intérieur élastique pour un arrangement coaxial sur le stabilisateur du véhicule,
le contour intérieur élastique de l'au moins un manchon annulaire (2) comprend, au moins sur le côté faisant face au stabilisateur du véhicule, une surface structurée en trois dimensions (3) avec un volume de réception de l'adhésif,
**caractérisé par le fait que**
la surface à structure tridimensionnelle (3) présente une profondeur de rugosité maximale (Rₘₐₓ) supérieure à 45µm et une profondeur de rugosité centrale (R_{K}) d'au moins 65 % par rapport à la profondeur de rugosité maximale (Rₘₐₓ) de la surface à structure tridimensionnelle (3), dans laquelle la profondeur de rugosité maximale (Rₘₐₓ) est la somme de la hauteur de pointe réduite (Rₚₖ), de la profondeur de rugosité centrale (R_{K}) et de la profondeur de rainure réduite (R₍ᵥₖ)), la hauteur de pointe réduite (R₍ₚₖ)), la profondeur de rainure réduite (R₍ᵥₖ)) et la profondeur de rugosité centrale (R_{K)} étant déterminées conformément à la norme EN ISO 13565-2 : Décembre 1997, dans lequel l'au moins un manchon annulaire (2) comprend en outre, dans une direction longitudinale du stabilisateur du véhicule, au moins un premier élément d'étanchéité disposé à une extrémité de l'au moins un manchon annulaire (2) et au moins un élément d'étanchéité supplémentaire disposé à l'autre extrémité de l'au moins un manchon annulaire (2).

2. Procédé de formation d'un palier adhésif de stabilisateur (1) selon la revendication 1 sur un stabilisateur de véhicule, en particulier pour produire des paliers d'épaulement de tige de torsion pour véhicules automobiles, comprenant les étapes suivantes :
a) fournir un stabilisateur ayant une face de recouvrement pour arranger un support adhésif de stabilisateur (1) ;
b) fournir le support adhésif du stabilisateur (1) comprenant au moins un manchon annulaire (2) ayant un contour intérieur résilient au moins sur le côté qui fait face au stabilisateur du véhicule, dans lequel le contour intérieur résilient comprend une surface structurée en trois dimensions (3) ayant un volume de réception de l'adhésif, dans laquelle la surface à structure tridimensionnelle (3) présente une profondeur de rugosité maximale (Rₘₐₓ) supérieure à 45µm et une profondeur de rugosité centrale (R_{K}) d'au moins 65 % par rapport à la profondeur de rugosité maximale (Rₘₐₓ) de la surface à structure tridimensionnelle (3), la profondeur de rugosité maximale (Rₘₐₓ) étant la somme de la hauteur de pointe réduite (Rₚₖ), de la profondeur de rugosité centrale (R_{K}) et de la profondeur de rainure réduite (R₍ᵥₖ)), la hauteur de pointe réduite (R₍ₚₖ)), la profondeur de rainure réduite (R₍ᵥₖ)) et la profondeur de rugosité centrale (R_{K)} étant déterminées conformément à la norme EN ISO 13565-2 : Décembre 1997 ;
c) fournir au moins un dispositif d'assemblage ;
d) fournir au moins une composition adhésive ;
e) prétraiter au moins partiellement la surface à structure tridimensionnelle (3) du support adhésif du stabilisateur (1) fourni à l'étape b) et/ou la face de recouvrement pour l'agencement du support adhésif du stabilisateur (1) fourni à l'étape a) avec au moins une composition adhésive fournie à l'étape d) ;
f) placer le au moins un support adhésif stabilisateur (1) fourni à l'étape b) ou prétraité au moins partiellement à l'étape e) dans le au moins un dispositif d'assemblage fourni à l'étape c) ;
g) disposer le stabilisateur fourni à l'étape a) dans le support adhésif du stabilisateur (1) dans le dispositif d'assemblage disposé à l'étape f) de manière à produire une liaison adhésive au moins partielle entre la surface à structure tridimensionnelle (3) qui est au moins partiellement prétraitée à l'étape e) et/ou la face de recouvrement qui est au moins partiellement prétraitée à l'étape e)

3. Procédé selon la revendication 2, **caractérisée par le fait que** la séquence des étapes e) à f) peut être choisie librement.

4. Procédé selon l'une des revendications 2 à 3, **caractérisé par le fait que** 'arrangement à l'étape f) est effectué avec une précontrainte du au moins un palier adhésif stabilisateur (1).

5. Procédé selon l'une des revendications 2 à 4, **caractérisé par le fait que** la production de la connexion adhésive au moins partielle à l'étape g) est effectuée en moins de 120 secondes, de préférence en moins de 90 secondes, de préférence encore en moins de 60 secondes, de préférence encore en moins de 30 secondes.

6. Procédé selon l'une des revendications 2 à 5, **caractérisé par le fait que** la production de la liaison adhésive au moins partielle à l'étape g) est effectuée sans apport de température de réaction, en particulier sans étape de chauffage supplémentaire.

7. Procédé selon l'une des revendications 2 à 6, **caractérisé par le fait qu'**au cours d'une étape supplémentaire h), le support adhésif du stabilisateur (1) qui est placé à l'étape g) sur le stabilisateur tout en produisant au moins une connexion adhésive, est retiré du dispositif d'assemblage au moins.

8. Stabilisateur de véhicule comprenant au moins un palier adhésif de stabilisateur (1) disposé coaxialement et comportant au moins un manchon annulaire (2) à contour intérieur élastique, selon la revendication 1.

9. Stabilisateur de véhicule comprenant au moins un palier adhésif de stabilisateur (1) disposé coaxialement et formé selon l'une des revendications 2 à 7.
